# EUROPÄISCHE PATENTSCHRIFT

(11) **EP 0 928 590 B1**
(45) Veröffentlichungstag und Bekanntmachung des Hinweises auf die Patenterteilung: **25.07.2001**
(21) Anmeldenummer: 98120347.4
(22) Anmeldetag: 28.10.1998
(51) Int. Cl.: A47J 31/40, G01F 23/18, G01G 19/56

(54) **Kaffeemaschine mit Dosiersignalanordnung**
Coffee machine with a dose indicating system
Machine à café avec un système d'indication de dose

(30) Priorität: 08.01.1998 DE 29800175 U
(43) Veröffentlichungstag der Anmeldung: 14.07.1999
(73) Patentinhaber: Eugster/Frismag AG, 8590 Romanshorn (CH)
(72) Erfinder: Eugster, Arthur, 8590 Romanshorn (CH)
(74) Vertreter: Schubert, Siegmar, Dipl.-Ing.

(56) Entgegenhaltungen:
- EP-A- 0 811 344
- DE-A- 2 614 470
- DE-A- 2 652 399
- GB-A- 2 140 286
- US-A- 3 348 468
- US-A- 4 715 245

## Beschreibung

Die Erfindung betrifft eine Kaffeemaschine mit Dosiersignalanordnung nach dem Oberbegriff des Anspruchs 1.

Bekannte Kaffeemaschinen, insbesondere Haushaltskaffeemaschinen funktionieren aufgrund ihrer konstruktiven Merkmale im wesentlichen derart, daß aus dem zu der Kaffeemaschine gehörenden, maschineneigenen Wasserbehälter Brühwasser durch einen Durchlauferhitzer fließt, dabei auf Brühtemperatur erhitzt wird und anschließend mittels des im Durchlauferhitzer entstehenden Dampfdruckes über eine Steigleitung zu dem Filtergefäß gefördert wird, welches einen Filtereinsatz mit dem Kaffeemehl aufnimmt. Das durch das Kaffeemehl durchsickernde Brühwasser wird zu Kaffeesud, welcher in eine Auffangkanne unter dem Filter läuft. Entsprechend der Dosierung der Kaffeemehlmenge in dem Filter einerseits und der das Kaffeemehl durchströmenden Brühwassermenge andererseits, d.h. gemäß dem Verhältnis dieser Mengen, wird mehr oder weniger starker Kaffeesud (abgekürzt: Kaffee) aufgebrüht. Um Kaffee der gewünschten Konzentration aufzubrühen, weisen zum Stand der Technik gehörende Wasserbehälter einen von außen durchsichtigen Abschnitt mit einer in Tassen gestuften Skala auf, um entsprechend der gewünschten Menge des aufzubrühenden Kaffees mit Wasser gefüllt zu werden. Um eine Kaffeemenge abzumessen, die zum Aufbrühen von Kaffee gewünschter Stärke gehört, ist der Kaffeemaschine in der Regel ein separater Meßlöffel beizugeben, dessen Volumen zur Aufnahme einer Kaffeemehlmenge zum Aufbrühen einer Tasse normal starken Kaffees bemessen ist. Die damit vorzunehmende Dosierung ist aber umständlich, weil die exakte Füllung des Meßlöffels zu beachten ist und erforderlichenfalls mehrfach zu wiederholen ist, oder ungenau, wenn der Meßlöffel zu viel oder zu wenig gefüllt ist. Eine gewünschte definierte Veränderung der Konzentration des aufgebrühten Kaffees ist noch schwieriger zu erreichen, weil der Meßlöffel nur ein bestimmtes Aufnahmevolumen hat.

Zum Stand der Technik gehört eine digitale Kaffeefüllstandsanzeige, die es erlauben soll, ein Meßlöffel-Abzählen beim Einfüllen von Kaffeemehl in ein Filtergefäß der Haushaltskaffeemaschine zu vermeiden (DE 297 01 818 U1). Hierzu ist ein Feingewichtssensor an einer Aufhängung eines Filtergefäßes angebracht, der mit einer Digitalanzeige in Verbindung steht, um das in das Filtergefäß gefüllte Kaffeegewicht anzuzeigen. Mit dieser Digitalanzeige kann aber nur dann das Filtergefäß mit dem gewünschten Kaffeegewicht befüllt werden, wenn dieses zum Brühen Kaffees gewünschter Stärke der die Befüllung vornehmenden Person bekannt ist und das Erreichen dieses Kaffeegewichts auf der Digitalanzeige beobachtet wird. Hierzu ist Aufmerksamkeit erforderlich, da sich der angezeigte Wert zwar ändert, aber keine deutliche Ja- und Nein-Entscheidung über zu viel oder zu wenige eingefüllten Kaffee direkt sichtbar ist. Die Benutzung dieser Digitalanzeige ist auch deswegen umständlich, weil der Bedienungsperson für alle infrage kommenden Brühwassermengen die jeweils zugehörigen Kaffeemehlmengen bekannt sein müssen bzw. einer Aufzeichnung entnommen werden müssen.

Bekannt ist auch eine automatische Dosiervorrichtung für Mahlgut, mit der die gewünschte Konzentration des Kaffeesuds selbstätig erreicht werden soll, in dem die Mahlgutmenge bzw. Kaffeemehlmenge mit einer Scheibe, die kammerbildende gekrümmte Blätter aufweist und die unter einem Mahlgutbehälter angeordnet ist, gesteuert in ein Filtergefäß eingegeben wird (EP 0 536 714 B1). Die Dosiereinrichtung wird durch eine mit einer Steuerschaltung aktivierten Motoreinheit betrieben. Die im einzelnen nicht offenbarte Steuerschaltung kann entsprechend der gewünschten Stärke des aufzubrühenden Kaffees programmiert werden. Die Motoreinheit dosiert dann einerseits das Wasservolumen, welches entsprechend der vorgesehenen Anzahl Tassenfüllungen in eine Aufgußkammer geschickt wird und dreht andererseits die Scheibe mit den Kammern, deren in Drehung versetzte Anzahl die Dosierung des Kaffees bestimmt. Der Aufbau dieser automatischen Dosiervorrichtung ist kompliziert und aufwendig.

Um bei einer Kaffeemaschine für jede Wassermenge die genaue Menge zu filternder Substanz, d.h. Kaffeemehl, zu bestimmen, ist bereits die Ausbildung der Kaffeemaschine mit den Merkmalen des Oberbegriffs des Anspruchs 1 bekannt, die eine Dosiersignalanordnung in Form eines beweglichen Zeigers an einem drehbaren Hebel und eines Markierungsstrichs aufweist (DE-A-26 14 470). Die Kaffeemaschine umfaßt ein das Kaffeemehl aufnehmendes Filtergefäß und einen Wasserbehälter, der mit einem Durchlauferhitzer wasserleitend verbunden ist. Ein Ausgang des Durchlauferhitzers ist zu dem Filtergefäß geführt. Der Wasserbehälter ist mit einem Wassermengensensor in Form eines Schwimmers mit einem Bügel ausgebildet, der an dem Hebel angelenkt ist. Der Hebel ist an einem dem Zeiger abgewendeten Ende drehbar an einem Gehäuse gelagert. Das Filtergefäß ist mit Lagernocken versehen, die in auswählbaren Rillen des drehbaren Hebels gelagert sind, der als Kaffeemengensensor aufgefaßt werden kann. Durch die Auswahl der Lagernocken wird das Übertragungsverhältnis der resultierenden Kräfte, die vom Filterhalter auf den Hebel ausgeübt werden, und Kaffeemehl zu Brühwasser bestimmt. Der drehbar gelagerte Hebel stellt eine Vergleichseinrichtung dar, mit der ein Kraftvergleich durchgeführt wird. - Der Kraftvergleich belastet dabei den verhältnismäßig langen Hebel und dessen drehbare Lagerung. Er ist reibungsabhängig und ungenau, wenn der Herstellungsaufwand für die Mechanik nicht hoch sein darf. Die mechanische Ausbildung ist verhältnismäßig kompliziert. Durch die Auswahl der Lagernocken läßt sich das gewünschte Verhältnis Kaffeemehl zu Brühwasser nicht stufenlos vorgeben.

Davon ausgehend liegt der vorliegenden Erfindung die Aufgabe zugrunde, eine Kaffeemaschine mit Dosiersignalanordnung zu schaffen, mit der für praktisch beliebige Brühwassermengen eine genaue Dosierung der zugehörigen Kaffeemenge in umkomplizierter, zuverlässiger und augenfälliger Weise signalisiert wird. Die Dosiersignalanordnung soll dabei deutlich signalisieren können, daß eine Kaffeemehlmenge für nach Wunsch gewählten starken Kaffee in das Filtergefäß eingegeben ist.

Diese Aufgabe wird für eine Kaffeemaschine mit Dosiersignalanordnung mit den in dem Anspruch 1 angegebenen Merkmalen gelöst.

Bei der erfindungsgemäßen Dosiersignalanordnung erfolgt die Steuerung der Anzeigeeinrichtung mit elektrischen Mitteln. Hierzu, ist der Wassermengensensor durch eine in einem Bodenbereich des mit einem Kaffeemaschinensockel fest verbundenen Wasserbehälters angeordnete Druckmembrane mit einem ersten verschiebbaren oder auslenkbaren mechanischen Abgriff und einem ersten Wandlerelement gebildet, an dem der erste mechanische Abgriff angreift. Das Wandlerelement ist von einem Typ, der eine elektrische Ausgangsgröße bei einer auf ihn einwirkenden mechanischen Größe, insbesondere einem Druck oder einer Kraft, abgibt.

Der Kaffeemehlmengensensor ist durch einen zweiten verschiebbaren oder auslenkbaren mechanischen Abgriff an einem beweglich gelagerten Filtergefäß und durch ein zweites Wandlerelement gebildet, an dem der zweite mechanische Abgriff angreift und der eine elektrische Ausgangsgröße abgibt. Das erste Wandlerelement und das zweite Wandlerelement sind dabei Bestandteile von Zweigen einer Brückenschaltung als Vergleichseinrichtung, an deren Nullzweig eine Anzeigevorrichtung angeschlossen ist. Hier werden also die elektrischen Ausgangssignale des Wassermengensensors und des Kaffeemehlmengensensors in einer kompakten elektrischen Vergleichsvorrichtung miteinander verglichen. Diese Vergleichseinrichtung funktioniert auch bei fehlender Wartung genau, da ohne mechanische Reibung.

In einer Variante der Dosiersignaleinrichtung gemäß Anspruch 2 ist der erste mechanische Abgriff statt an einer Membrane direkt an dem Wasserbehälter, vorzugsweise dessen Boden, angeordnet, so daß sich der erste mechanische Abgriff auf dem ersten Wandlerelement abstützt, wobei der Wasserbehälter beweglich, insbesondere vertikal verschiebbar gelagert ist. Der zweite mechanische Abgriff des Kaffeemehlmengensensors kann wie in der Grundausführung ausgebildet sein. Die Variante kombiniert die Vorteile des elektrischen Vergleichs der Wandlerausgangsgrößen und der fehlenden Membrane des Wasserbehälters. Wenn das erste Wandlerelement, auf dem sich der erste mechanische Abgriff abstützt, ein Wandlerelement des Typs ist, welches die Kraft des auf ihn einwirkenden Abgriffs in eine elektrische Ausgangsgröße umsetzt, ist kein Feder- oder Rückstellelement an dem beweglich gelagerten Wassergefäß erforderlich.

Eine unkomplizierte Ausbildung der schwenkbaren Lagerung des Filtergefäßes ist in Anspruch 3 angegeben, wonach das Filtergefäß über einen an ihm angebrachten Filteraufhängehebel um eine horizontale Achse schwenkbar ist.

Bei einem elektrischen Vergleich der Ausgangsgrößen des Kaffeemehlmengensensors und des Brühwassermengensensors erfolgt die Einstellung der Konzentration des aufgebrühten Kaffees gemäß Anspruch 9 besonders zweckmäßig durch einen einstellbaren Widerstand in der Brückenschaltung, welche die Sensoren umfaßt.

Varianten der Anzeigeeinrichtung sind in den Ansprüchen 4 und 5 angegeben, von denen die elektrisch optische Anzeigeeinrichtung bevorzugt ist.

In der Grundausführung und der Variante der Dosiersignalanordnung können das erste Wandlerelement und das zweite Wandlerelement gemäß Anspruch 6 durch je einen Dehnmeßstreifen gebildet werden. Alternativen sind gemäß den Ansprüchen 7 und 8 Wandlerelemente kapazitiver Bauart oder induktiven Typs.

Eine Grundausführung und eine Variante der Erfindung werden im folgenden anhand einer Zeichnung mit drei Figuren erläutert. Es zeigen:
- Fig. 1: eine Kaffeemaschine, teilweise geschnitten, mit der Grundausführung der Dosiersignalanordnung,
- Fig. 2: eine Schaltungsanordnung von Elementen der Dosiersignalanordnung und
- Fig. 3: eine Kaffeemaschine, teilweise geschnitten, mit der Variante der Dosiersignalanordnung.

Bei allen Darstellungen der Kaffeemaschine sind zu dieser üblicherweise gehörende Teile, die nicht direkt mit der Dosiersignalanordnung zusammenhängen, wie Dampferzeuger, insbesondere Durchlauferhitzer, der mit dem Wasserbehälter über eine flexible Leitung in Verbindung steht und von dem ein Ausgang zu einem Filtergefäß der Kaffeemaschine geführt ist, nicht dargestellt. Diese nicht dargestellten Teile gehören zum Stand der Technik.

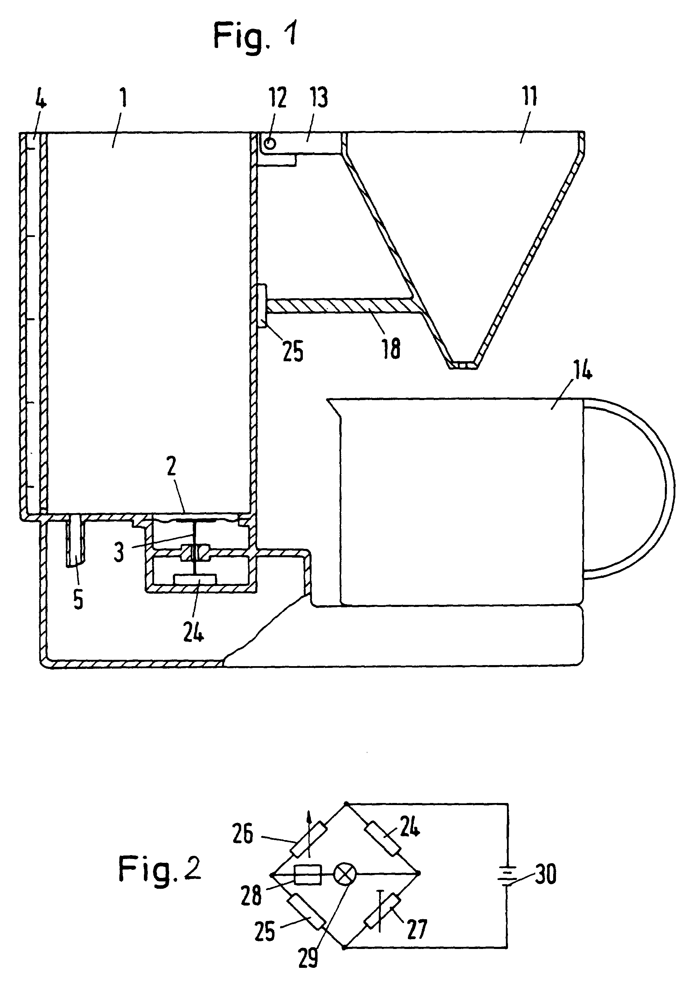

In Fig. 1 ist mit 1 der Wasserbehälter der Kaffeemaschine bezeichnet, in dessen Boden eine Druckmembran 2 dicht eingelassen ist, von der nach unten ein Membranstößel, kurz Stößel 3 genannt, absteht. Der Stößel 3 bildet somit einen ersten verschiebbaren oder auslenkbaren mechanischen Abgriff für einen Wassermengensensor. Der Stößel 3 liegt an einem Drucksensor bzw. Kraftsensor als erstes Wandlerelement in Form eines Dehnmeßstreifens an, der in einer Brückenschaltung gemäß Fig. 2 angeordnet ist.

Seitlich weist der Wasserbehälter eine durchsichtige Wasserstandsanzeige 4 auf, die entsprechend dem Volumen üblicher Tassen markiert ist. In den Boden des Wasserbehälters ist ein Wasserauslauf 5 angeordnet, der mit dem nicht dargestellten Dampferzeuger in Verbindung steht.

Ein Filtergefäß 11 der Kaffeemaschine ist zur Realisierung eines Kaffeemehlsensors um eine horizontale Achse 12 schwenkbar, die durch einen Filteraufhängehebel 13 geführt ist. Das Filtergefäß 11 ist in üblicher Weise über einer Kaffeekanne 14 angeordnet, so daß diese den aus dem Filter fließenden Kaffeesud aufnehmen kann.

Von dem schwenkbaren Filtergefäß steht seitlich ein mechanischer Abgriff als zweiter mechanischer Abgriff 18 ab, der als Filterstellglied bezeichnet wird und allgemein einen wesentlichen Bestandteil des Kaffeemehlsensors bildet. Analog dazu kann der erste mechanische Abgriff, der als Stößel 3 an der Druckmembran 2 verwirklicht ist, als Wassermengenstellglied bezeichnet werden.

Ein zweites Wandlerelement 25, das ebenfalls durch einen Dehnmeßstreifen verwirklicht sein kann, bildet - durch das Filterstellglied 18 betätigt - den Kaffeemehlmengensensor. Das mit dem Kaffeemehlmengensensor verbundene Filtergefäß 11, das um eine horizontale Achse 12, die durch einen Filteraufhängehebel 13 hindurchgeht, schwenkbar gelagert ist, stützt sich über das Filterstellglied 18 auf das zweite Wandlerelement 25. Das zweite Wandlerelement 25 gehört ebenfalls zu der Brückenschaltung gemäß Fig. 2.

Die Wheatstone'sche Brückenschaltungsanordnung gemäß Fig. 2 ist vervollständigt durch einen Einstellwiderstand 26 sowie einen Abgleichwiderstand 27 in weiteren Brückenzweigen. In einem Nullzweig der Brückenschaltung sind eine Kippstufe 28 und eine Signallampe 29 als elektrisch optische Anzeigeeinrichtung angeordnet. Die Brückenschaltungsanordnung wird durch eine Stromquelle 30 gespeist.

Mit dem Einstellwiderstand 26 kann das Verhältnis einer beliebigen Brühwassermenge beizumessenden Kaffeemehlmenge eingestellt werden, um Kaffee gewünschter Stärke aufzubrühen. Der Abgleichwiderstand 27 dient zum Abgleich der Brücke, um eine gewünschte Grundeinstellung zu erreichen und Bauelementegewichtstoleranzen auszugleichen.

Wenn in den Wasserbehälter 1 Wasser entsprechend der gewünschten Menge aufzubrühenden Kaffees eingefüllt wird, ist die Brücke dementsprechend mehr oder weniger verstimmt, da der Widerstand des ersten Wandlerelements 24 sich entsprechend der Wassermenge einstellt, die über die Druckmembrane 2 und dem Stößel 3 einen Druck auf das erste Wandlerelement 24 ausübt. Jetzt muß so viel Kaffeemehl in das Filtergefäß 11 eingefüllt werden, bis sich der Widerstand des zweiten Wandlerelements 25 infolge des Drucks, der auf ihn durch den zweiten mechanischen Abgriff 18, das Filterstellglied ausgeübt wird, so einstellt, daß die Spannung an dem Nullzweig der Brücke, in dem die Kippstufe 28 und die Signallampe 29 liegen, einen vorgegebenen Wert erreicht, bei dem die Kippstufe kippt und die Signallampe 29 aufleuchtet. Wie oben erwähnt kann dieser Punkt des Kippens der Kippstufe und des Aufleuchtens der Signallampe durch Einstellen des Einstellwiderstands 26 entsprechend der gewünschten Stärke des Kaffeesuds vorgegeben werden.

Die grundsätzlichen Vorteile der brühwasserunabhängigen exakten Dosiermöglichkeit der Kaffeemehlmenge, wonach das richtige Verhältnis von Brühwasser zu Kaffeemehl nicht nur für eine bestimmte Wassermenge bzw. Kaffeemehlmenge signalisiert wird, sondern für - im Rahmen des Fassungsvermögens des Wasserbehälters - beliebige Wassermengen, denen die richtige Kaffeemehlmenge beigemessen werden kann, und analog umgekehrt, sind also bei der vorliegenden Dosiersignalanordnung erhalten, und zwar mit zum Teil wenig Verschleiß unterworfenen und wenig wartungsbedürftigen Mitteln. Allerdings muß bei der Brückenschaltung gemäß Fig. 4 dafür gesorgt werden, daß diese langzeitig die gewünschte Charakteristik, z.B. unabhängig von Temperatureinflüssen, aufweist.

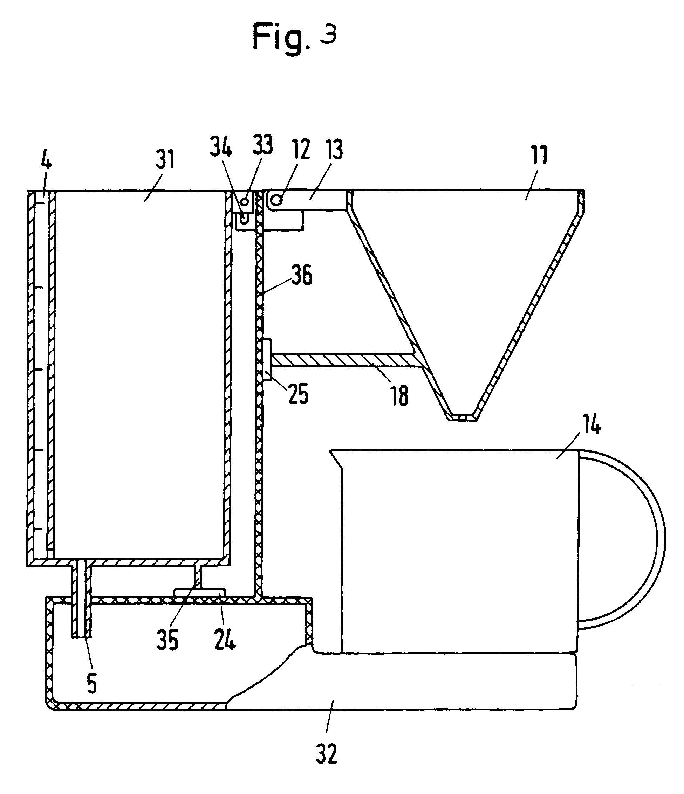

Von der obigen Grundausführung der Dosiersignalanordnung unterscheidet sich die in Fig.3 gezeigte Variante dadurch, daß hier der Wasserbehälter 31 nicht fest auf einem Sockel 32 der Kaffeemaschine montiert ist, sondern vertikal geführt beweglich gelagert ist. Hierzu reicht ein an dem Wasserbehälter 31 angebrachter Gleitstift 33 in einen vertikalen Schlitz 34, der aus einem Vorsprung 35 ausgeformt ist. Der Vorsprung steht mit dem Sockel 32 über einen Träger 36 in fester Verbindung.

Der Träger 36 trägt auch die horizontale Achse 12, um die das Filtergefäß 11 schwenkbar ist.

Im übrigen entspricht die Aufhängung des Filtergefäßes 11 und dessen wirkungsmäßige Verbindung mit einem zweiten Wandlerelement 25 über den zweiten mechanischen Abgriff bzw. das Filterstellglied 18 der Anordnung gemäß Fig.1.

Das erste Wandlerelement 24, das wiederum als Dehnmeßstreifen ausgebildet sein kann und Bestandteil des Wassermengensensors bildet, wird in der Variante über einen Sporn 35 betätigt, der unten von dem Boden des Filtergefäßes 31 absteht und dessen Gewicht einschließlich einer Füllung mit Brühwasser auf das erste Wandlerelement überträgt.

Das erste Wandlerelement 24 und das zweite Wandlerelement 25 sind in der Brückenschaltung gemäß Fig. 2 auch bei der Variante der Dosiersignalanordnung angeordnet. Somit entspricht die Wirkungsweise der Dosiersignalanordnung mit Ausnahme der Übertragung des Gewichts des in den Wasserbehälter 31 eingefüllten Wassers auf das erste Wandlerelement 24 der Wirkungsweise der Grundausführung gemäß Fig. 1 in Verbindung mit der Brückenschaltungsanordnung gemäß Fig. 2. Es entfallen jedoch die verhältnismäßig empfindliche Druckmembrane 2 mit Stößel 3 und dessen Lagerung.

## Patentansprüche

1. Kaffeemaschine mit Dosiersignalanordnung umfassend ein Kaffeemehl aufnehmendes Filtergefäß (11) sowie einen Wasserbehälter (31), der mit einem Dampferzeuger, insbesondere einem Durchlauferhitzer, in wasserleitender Verbindung steht, wobei der Dampferzeuger ausgangsseitig zu dem Filtergefäß geführt ist, wobei der Wasserbehälter (31) mit einem Wassermengensensor (2,3; 24; 35) verbunden ist, wobei das Filtergefäß (11) mit einem Kaffeemehlmengensensor (18; 25) gekuppelt ist und wobei mindestens je ein Ausgang des Wassermengensensors (2; 3; 24; 35) und des Kaffeemehlmengensensors (18; 25) zu je einem Eingang einer Vergleichseinrichtung (26-28) geführt sind, die geeignet ist, eine Anzeigevorrichtung (29) abhängig von dem Verhältnis der Ausgangsgrößen des Wassermengensensors (2; 3; 24; 35) und des Kaffeemehlmengensensors (18; 25) zu betätigen, wobei dem Wassermengensensor (2,3; 24; 35) ein erster verschiebbarer oder auslenkbarer mechanischer Abgriff (3) zugeordnet ist und dem Kaffeemehlmengensensor ein zweiter verschiebbarer oder auslenkbarer mechanischer Abgriff (18) zugeordnet ist, der an dem beweglich gelagerten Filtergefäß (11) angreift,
**dadurch gekennzeichnet,**
daß der Wassermengensensor (2; 3; 24; 35) durch ein in einem Bodenbereich des mit einem Kaffeemaschinensockel fest verbundenen Wasserbehälters (1) angeordnete Druckmembrane (2) mit dem ersten verschiebbaren oder auslenkbaren mechanischen Abgriff (3) und einem ersten Wandlerelement (24) gebildet ist, an dem der erste mechanische Abgriff (3) angreift und das eine elektrische Ausgangsgröße abgibt, daß der Kaffeemehlmengensensor (18,23) durch den zweiten verschiebbaren oder auslenkbaren mechanischen Abgriff (18) an einem beweglich gelagerten Filtergefäß (11) und durch ein zweites Wandlerelement (25) gebildet ist, an dem der zweite mechanische Abgriff (18) angreift und das eine elektrische Ausgangsgröße abgibt, und daß das erste Wandlerelement (24) und das zweite Wandlerelement (25) als Bestandteile von Zweigen einer Brückenschaltung (26,27) als Vergleichseinrichtung angeordnet sind, an deren Nullzweig eine Anzeigevorrichtung (29) angeschlossen ist.

2. Kaffeemaschine nach Anspruch 1,
**dadurch gekennzeichnet,**
daß der erste mechanische Abgriff (35) statt an einer Membrane direkt an dem Wasserbehälter (19), vorzugsweise dessen Boden, angeordnet ist, so daß sich der erste mechanische Abgriff (35) auf dem ersten Wandlerelement abstützt, und daß der Wasserbehälter beweglich, insbesondere vertikal verschiebbar gelagert ist.

3. Kaffeemaschine nach Anspruch 1 oder 2,
**dadurch gekennzeichnet,**
daß das Filtergefäß (11) über einen an ihm angebrachten Filteraufhängehebel (11) um eine horizontale Achse (12) schwenkbar gelagert ist.

4. Kaffeemaschine nach einem der vorangehenden Ansprüche
**gekennzeichnet durch**
eine elektrisch optische Anzeigeeinrichtung (Signallampe 29).

5. Kaffeemaschine nach einem der Ansprüche 1 bis 8,
**gekennzeichnet durch**
eine elektrisch akustische Anzeigeeinrichtung.

6. Kaffeemaschine nach einem der vorangehenden Ansprüche,
**dadurch gekennzeichnet,**
daß das erste Wandlerelement (24) und das zweite Wandlerelement (25) durch je einen Dehnmeßsstreifen gebildet werden.

7. Kaffeemaschine nach einem der Ansprüche 1 bis 5,
**dadurch gekennzeichnet,**
daß das erste Wandlerelement (24) und das zweite Wandlerelement (25) der kapazitiven Bauart sind.

8. Kaffeemaschine nach einem der Ansprüche 1 bis 5,
**dadurch gekennzeichnet,**
daß das erste Wandlerelement (24) und das zweite Wandlerelement (25) induktiven Typs sind.

9. Kaffeemaschine nach einem der vorangehenden Ansprüche,
**dadurch gekennzeichnet,**
daß in wenigstens einem Brückenzweig der Brückenschaltung ein einstellbarer Widerstand (26) angeordnet ist und daß von einem Nullzweig die Anzeigevorrichtung steuerbar ist.

## Claims

1. Coffee making machine with a dosage signalling arrangement comprising a filter receptacle (11) to receive ground coffee and a water container (31) in water-conveying communication with a steam generator, in particular a continuous throughput heater, with the steam generator connected on its outlet side to the filter receptacle, such that the water container (31) is connected to a water quantity sensor (2; 3; 24; 35), the filter receptacle (11) is connected to a sensor (18; 25) that detects the quantity of ground coffee, and at least one output respectively of the water quantity sensor (2; 3; 24; 35) and of the ground coffee quantity sensor (18; 25) are connected each to an input of a comparison device (26 - 28) suitable for actuating a display device (29) as a function of the ratio of the initial magnitudes of the water quantity sensor (2; 3; 24, 35) and the ground coffee quantity sensor (18; 25), such that the water quantity sensor (2; 3; 24, 35) is associated with a first displaceable or deflectable mechanical detector element (3) and the ground coffee quantity sensor is associated with a second displaceable or deflectable mechanical detector element (18), which engages with the movably mounted filter receptacle (11),
**characterised in that**
the water quantity sensor (2; 3; 24; 35) is formed by a pressure membrane (2) arranged in a bottom area of the water container (1) permanently connected to a pedestal of the coffee making machine together with the first displaceable or deflectable mechanical detector element (3) and a first transducer element (24), with which the first mechanical element (3) engages and which emits an electrical output magnitude, the ground coffee quantity sensor (18; 23) is formed by the second displaceable or deflectable mechanical detector element (18) on a movably mounted filter receptacle (11) together with a second transducer element (25) with which the second mechanical element (18) engages and which emits an electrical output magnitude, and the first transducer element (24) and the second transducer element (25) are arranged as components of branches of a bridge circuit (26, 27) as a comparison device, to whose zero branch is connected a display device (29).

2. Coffee making machine according to Claim 1,
**characterised in that**
the first mechanical detector element (35), instead of being arranged on a membrane, is arranged directly on the water container (19), preferably its bottom, so that the first mechanical element (35) rests on the first transducer element, and the water container is mounted so that it can move, in particular so that it can be displaced vertically.

3. Coffee making machine according to Claims 1 or 2,
**characterised in that**
the filter receptacle (11) is mounted so that it can be swivelled about a horizontal axis (12) by means of a filter suspension lever (11) attached thereto.

4. Coffee making machine according to any of the preceding claims,
**characterised in that**
it comprises an electro-optical display device (signal light).

5. Coffee making machine according to any of Claims 1 to 4,
**characterised in that**
it comprises an electro-acoustical display device.

6. Coffee making machine according to any of the preceding claims,
**characterised in that**
the first transducer element (24) and the second transducer element (25) are each formed by a strain gauge.

7. Coffee making machine according to any of Claims 1 to 5,
**characterised in that**
the first transducer element (24) and the second transducer element (25) are each capacitative structures.

8. Coffee making machine according to any of Claims 1 to 5,
**characterised in that**
the first transducer element (24) and the second transducer element (25) are each of the inductive type.

9. Coffee making machine according to any of the preceding claims,
**characterised in that**
a variable resistor (26) is arranged in at least one bridge branch of the bridge circuit, and the display device can be controlled from a zero branch.

## Revendications

1. Machine à café ou cafetière comportant un système d'indication de dosage, comprenant un porte-filtre (11) recevant la mouture de café ainsi qu'un réservoir d'eau (31) qui est en communication sur le plan de l'écoulement d'eau avec un générateur de vapeur, notamment un système de chauffage d'eau rapide, le générateur de vapeur conduisant, côté sortie, au porte-filtre, le réservoir d'eau (31) étant relié à un détecteur de quantité d'eau (2, 3; 24; 35), le porte-filtre (11) étant couplé à un détecteur de quantité de mouture de café (18; 25), et au moins une sortie respective du détecteur de quantité d'eau (2, 3; 24; 35) et du détecteur de quantité de mouture de café (18; 25) conduisant à une entrée respective d'un dispositif de comparaison (26-28), qui est adapté à actionner un dispositif de visualisation (29) en fonction du rapport des grandeurs de sortie du détecteur de quantité d'eau (2, 3; 24; 35) et du détecteur de quantité de mouture de café (18; 25), un premier élément de prise mécanique (3), qui peut coulisser ou être dévié, étant associé au détecteur de quantité d'eau (2, 3; 24; 35) et un second élément de prise mécanique (18), qui peut coulisser ou être dévié, étant associé au détecteur de quantité de mouture de café (18; 25) et interagissant avec le porte-filtre (11) monté de manière mobile, caractérisée en ce que le détecteur de quantité d'eau (2, 3; 24; 35) est formé par une membrane de pression (2) qui est disposée dans une zone de fond du réservoir d'eau (1) lié de manière fixe à la base de la machine à café, et qui comporte le premier élément de prise mécanique (3) pouvant coulisser ou être dévié, et par un premier élément de capteur (24) avec lequel interagit le premier élément de prise mécanique (3) et qui délivre une grandeur de sortie électrique, en ce que le détecteur de quantité de mouture de café (18; 25) est formé par le second élément de prise mécanique (18), qui peut coulisser ou être dévié, sur un porte-filtre (11) monté de manière mobile, et par un second élément de capteur (25) avec lequel interagit le second élément de prise mécanique (18) et qui délivre une grandeur de sortie électrique, et en ce que le premier élément de capteur (24) et le second élément de capteur (25) sont montés en tant que parties constitutives de branches d'un circuit en pont (26, 27) faisant office de dispositif de comparaison, et à la branche neutre duquel est raccordé un dispositif de visualisation (29).

2. Machine à café selon la revendication 1, caractérisée en ce que le premier élément de prise mécanique (35), au lieu d'être placé sur une membrane, est placé directement sur le réservoir d'eau (19), de préférence sur le fond de celui-ci, de sorte que le premier élément de prise mécanique (35) s'appuie sur le premier élément de capteur, et en ce que le réservoir d'eau est monté de manière mobile, notamment de manière à pouvoir coulisser verticalement.

3. Machine à café selon la revendication 1 ou 2, caractérisée en ce que le porte-filtre (11) est monté de manière à pouvoir pivoter autour d'un axe horizontal (12), par l'intermédiaire d'un levier de suspension de filtre (13) qui est placé sur le porte-filtre.

4. Machine à café selon l'une des revendications précédentes, caractérisée par un dispositif de visualisation électrique, optique (lampe de signalisation 29).

5. Machine à café selon l'une des revendications 1 à 4, caractérisée par un dispositif de visualisation électrique, acoustique.

6. Machine à café selon l'une des revendications précédentes, caractérisée en ce que le premier élément de capteur (24) et le second élément de capteur (25) sont constitués chacun par une jauge extensométrique.

7. Machine à café selon l'une des revendications 1 à 5, caractérisée en ce que le premier élément de capteur (24) et le second élément de capteur (25) sont d'un mode de construction capacitif.

8. Machine à café selon l'une des revendications 1 à 5, caractérisée en ce que le premier élément de capteur (24) et le second élément de capteur (25) sont du type inductif.

9. Machine à café selon l'une des revendications précédentes, caractérisée en ce que dans au moins l'une des branches du circuit en pont, est placée une résistance réglable (26), et en ce que le dispositif de visualisation peut être commandé par une branche neutre.
